# EUROPEAN PATENT APPLICATION

(11) **EP 3 929 219 A1**
(43) Date of publication of application: **29.12.2021**
(21) Application number: 20181773.1
(22) Date of filing: 23.06.2020
(51) Int. Cl.: C08F 2/50, C09D 11/101, C09D 11/03, C09D 201/00, C09D 4/06

(54) **LOW-MIGRATION, LOW EXTRACTABLE POLYMERIC PHOTOINITIATOR FOR FOOD PACKAGING APPLICATIONS**

(71) Applicant: Hubergroup Deutschland GmbH, 85551 Kirchheim-Heimstetten (DE)
(72) Inventor: BACK, Justus, 81829 München (DE); BICER, Taner, 85567 Grafing (DE); CHATTERJEE, Subhankar, Hampton, New Jersey 08827 (US)
(74) Representative: Henkel & Partner mbB

(57) **Abstract**

The present invention relates to a compound having the following general formula (I): 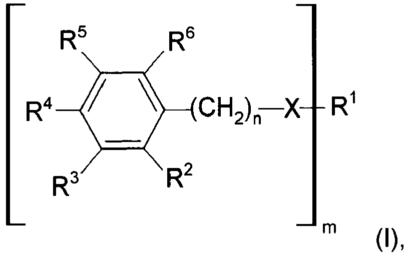 wherein:
R¹ is a polymer,
X is a bond or a non-hydrolysable linking group, e.g. O, S, an urethane group, a urea group, an amide group, CH₂-CH=CH, NH or NR⁷, with R⁷ being a branched or linear C₁₋₁₀-alkyl group, or a branched or linear C₁₋₁₀-alkenyl group,
m is an integer between 1 and 20,
n is an integer between 0 and 10,
R² to R⁶ are independently from each other selected from H, a branched or linear C₁₋₁₀-alkyl group, or a branched or linear C₁₋₁₀-alkenyl group, provided that one or two of the groups R² to R⁶ have the following general formula (II): 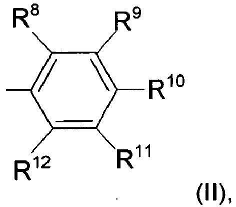 wherein
one or two of the groups R⁸ to R¹² have the below general formula (III), wherein all of the remaining R⁸ to R¹² are independently from each other selected from H, a branched or linear C₁₋₁₀-alkyl group, or a branched or linear C₁₋₁₀-alkenyl group,

C(O)-R¹³- (III),

wherein:
R¹³ has the following general formula (IV): 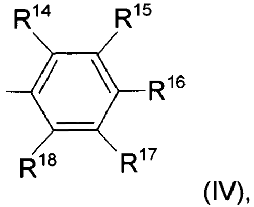 wherein:
R¹⁴, R¹⁵ and R¹⁸ are independently from each other selected from H, a branched or linear C₁₋₁₀-alkyl group, and a branched or linear C₁₋₁₀-alkenyl group,
R¹⁶ and R¹⁷ are independently from each other selected from H, a branched or linear C₁₋₁₀-alkyl group, and a branched or linear C₁₋₁₀-alkenyl group or wherein R¹⁶ and R¹⁷ are linked together to form a group comprising one or two rings, wherein this group is fused via one of the one or two rings to the group R¹³, wherein if the group comprises two rings the two rings are fused together, wherein each of the one or more rings is a substituted or unsubstituted five- or six-membered alicyclic hydrocarbon ring, a substituted or unsubstituted five- or six-membered aromatic hydrocarbon ring or a substituted or unsubstituted five- or six-membered heterocyclic ring, and

wherein furthermore one of R¹⁴ and R¹⁸ may be a bond and one of R⁸ to R¹² being adjacent to the one or two of the groups R⁸ to R¹² having the general formula (III) may be a bond being connected with the bond of R¹⁴ or R¹⁸ directly or by means of O, S, NH, NR⁷ with R⁷ being as defined above or C(O).

## Description

The present invention relates to a photoinitiator compound, which is low- or even non-migrating, low extractable in solvents and hydrolysis-stable and thus perfectly well suited to be used in an energy curable composition, such as in an energy curable ink composition or energy curable varnish composition for initiating the curing thereof. Furthermore, the present invention relates to an energy curable composition, such as preferably an energy curable ink composition or energy curable varnish composition including such a photoinitiator compound.

Photoinitiators are compounds that create reactive species (such as free radicals, cations or anions) after absorption of visible light or UV radiation in a photolysis reaction. On account of this reason, photoinitiators are used to initiate reactions, such as free radical or cationic polymerization reactions. A particular important commercial application is the initiation of curing reactions of energy curing compositions, such as of energy curing molding compositions, of energy curing dental impression compositions, of energy curing varnishes, of energy curing inks and the like. In all these applications photoinitiators are used to initiate a controlled curing reaction of the composition.

There are two different types of photoinitiators, which are called type I and type II photoinitiators. Type I photoinitiators are those that undergo unimolecular bond cleavage after absorption of light to render the reactive species and no other species are necessary in order for these photoinitiators to work. An example for a type I photoinitiator and its working principle is the following:

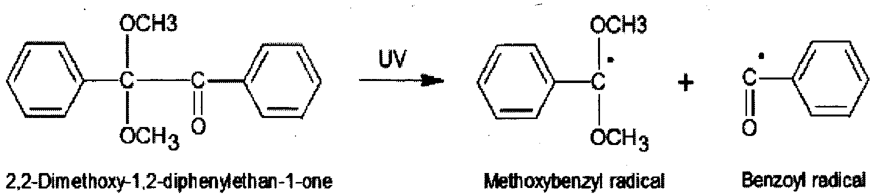

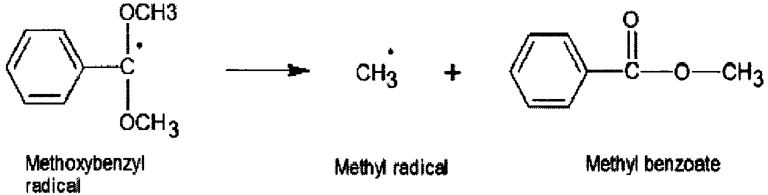

Type II photoinitiators absorb UV light to form excited molecules, which then abstract an electron or hydrogen atom from a donor molecule (also called synergist). The donor molecule then reacts with an ethylenically unsaturated group from monomers, oligomers or polymers. Common type II photoinitiators are thioxanthone and its derivatives, benzophenone and its derivatives, carbazol derivatives and keto-coumarine and its derivatives. A common system is the combination of benzophenone with a synergist such as a tertiary amine. The amine functions as active hydrogen donor for the excited photoinitiator. The abstraction of hydrogen produces yery reactive alkyl-amino radicals which subsequently initiate polymerization.

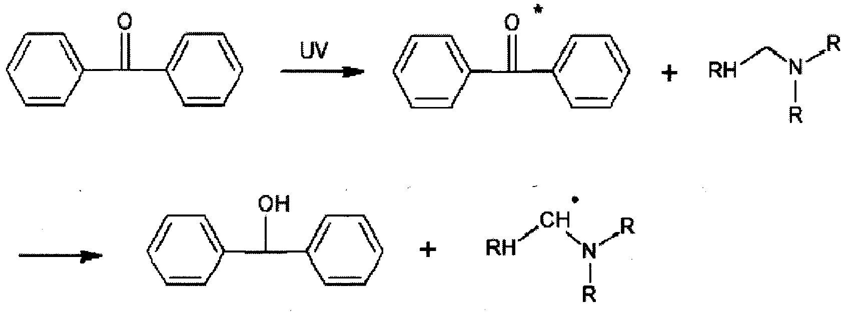

Frequentyl used amine synergists are 2-ethylhexyl-(4-N,N-dimethylamino)benzoate and 2-ethyl-(4-N,N-dimethylamino)benzoate.

A plurality of effective photoinitiators are commercially available and lead to satisfying photoinitiating and curing results. A particularly suitable photoinitiator is 4-phenyl-benzophenone due to its excellent initiation capabilities and due to the fact that it reveals low yellowing properties. However, 4-phenyl benzophenone is toxic and in particular reprotoxic. More specifically, 4-phenyl benzophenone has been recently classified by the European Chemical Agency (ECHA) to be reprotoxic cat 1b. Furthermore, 4-phenyl benzophenone is - like most of the known photoinitiators - a low molecular weight compound and thus has a high migration potential in a plurality of materials, such as paper, cardboard, thin metal foils, thin plastic films and the like. In addition, 4-phenyl benzophenone is extractable by many common solvents from the composition, in which it is contained. However, in a plurality of applications such toxic, migration and extraction properties are highly disadvantageous. Of course, toxic, easily extractable compounds that also have a high migration potential shall not be used in applications, in which the composition including the photoinitiator comes into contact with a human being, such as with the mucosa in the case of dental impression masses. The same is valid for applications, in which the composition including the photoinitiator comes into direct or indirect contact with food, such as in the case of food packaging and particularly primary food packaging, which are printed on the non-food contact side or even on the food-contact side of a packing. Another drawback of 4-phenyl benzophenone is its tendency to crystallize in formulations with low viscosity, such as in flexographic ink formulations. Hence higher concentrations are not favorable.

On account of these reasons, it has been already proposed to increase the molecular weight of photoinitiators by chemically coupling them with high molecular weight compounds, in order to reduce their extractability into solvents and their migration potential. For instance, it is described in US 10,189,930 B2 to chemically bond one or more substituted 4-phenyl benzophenone molecules to a hydroxy compound having 1 to 6 hydroxyl groups, wherein the substituted 4-phenyl benzophenone molecule(s) is/are bonded to the hydroxy compound by reaction of a carboxylic acid group arranged in beta-position to the carbonyl group of the 4-phenyl benzophenone molecule(s) and a hydroxyl group of the hydroxy compound. For instance, the hydroxy compound may be an alkoxylated polyol. However, these photoinitiators have the drawback of being hydrolysis-sensitive in acidic or alkaline conditions. Moreover, their migration potential and extractability are still too high for certain applications. In addition, there might be a negative impact on their photoreactivity due to the fact that the linking group is very close to the photoreactive carbonyl group and thus might negatively affects its efficiency.

In view thereof, the object underlying the present invention is to provide a photoinitiator compound, which efficiently initiates after the absorption of visible light or preferably of ultraviolet radiation a polymerization reaction of a composition further including polymerizable monomers and/or oligomers in a controlled manner, wherein the photoinitiator compound has a low migration potential, has a low extractability in solvents, such as ethanol, water, acidic or alkaline aqueous media, and is - apart from its sensibility against visible light and/or ultraviolet radiation - stable and in particular stable against hydrolysis, and is therefore particularly suitable to be used as photoinitiator in an energy curable ink composition or energy curable varnish composition, particularly for one which is designed to be used for printing the non-food contact side or even the food-contact side of a food packing and in particular of a primary food packing.

In accordance with the present invention, this object is satisfied by providing a compound having the following general formula (I): 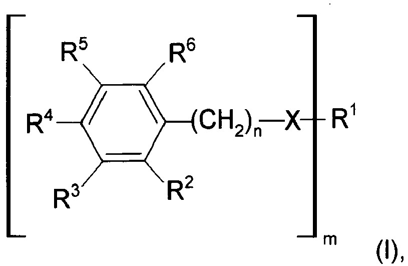 wherein:
- R¹: is a polymer,
- X: is a bond or a non-hydrolysable linking group, e.g. O, S, an urethane group, a urea group, an amide group, CH₂-CH=CH, NH or NR⁷, with R⁷ being a branched or linear C₁₋₁₀-alkyl group, or a branched or linear C₁₋₁₀-alkenyl group,
- m: is an integer between 1 and 20,
- n: is an integer between 0 and 10,
- R² to R⁶: are independently from each other selected from H, a branched or linear C₁₋₁₀-alkyl group, or a branched or linear C₁₋₁₀-alkenyl group, provided that one or two of the groups R² to R⁶ have the following general formula (II): 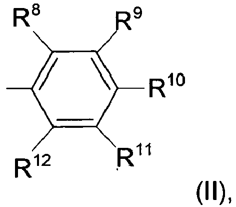
wherein one or two of the groups R⁸ to R¹² have the below general formula (III), wherein all of the remaining R⁸ to R¹² are independently from each other selected from H, a branched or linear C₁₋₁₀-alkyl group, or a branched or linear C₁₋₁₀-alkenyl group,

C(O)-R¹³- (III),

wherein:
R¹³ has the following general formula (IV): 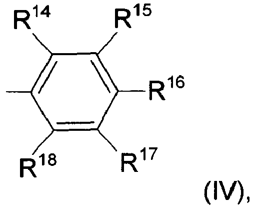 wherein:
R¹⁴, R¹⁵ and R¹⁸ are independently from each other selected from H, a branched or linear C₁₋₁₀-alkyl group, and a branched or linear C₁₋₁₀-alkenyl group,
R¹⁶ and R¹⁷ are independently from each other selected from H, a branched or linear C₁₋₁₀-alkyl group, and a branched or linear C₁₋₁₀-alkenyl group or wherein R¹⁶ and R¹⁷ are linked together to form a group comprising one or two rings, wherein this group is fused via one of the one or two rings to the group R¹³, wherein if the group comprises two rings the two rings are fused together, wherein each of the one or more rings is a substituted or unsubstituted five- or six-membered alicyclic hydrocarbon ring, a substituted or unsubstituted five- or six-membered aromatic hydrocarbon ring or a substituted or unsubstituted five- or six-membered heterocyclic ring, and
wherein furthermore one of R¹⁴ and R¹⁸ may be a bond and one of R⁸ to R¹² being adjacent to the one or two of the groups R⁸ to R¹² having the general formula (III) may be a bond being connected with the bond of R¹⁴ or R¹⁸ directly or by means of O, S, NH, NR⁷ with NR⁷ being as defined above or C(O).

This solution bases on the surprising finding that such compounds do not only have an excellent low migration potential and an excellent low extractability in solvents, such as in ethanol, water, an acidic aqueous medium or an alkaline aqueous medium, but also have an excellent stability against hydrolysis, such as in acidic or alkaline aqueous media. Moreover, despite the chemical coupling of the benzophenone derivate with the polymer R¹, the compounds have surprisingly the same excellent photoreactivity and curing speed as 4-phenyl benzophenone based on the same amount of 4-phenylbenzophenone in a formulation. Therefore, the compounds are particularly suitable to be used as photoinitiator in all energy curing compositions, which require low toxicity, such as those being used in direct contact with a human being, e.g. dental fillings, UV 3D printed tooth replacements, 3D printed organ replacement parts, etc., or food. Moreover, it has been found that these compounds, if formulated in a coating, such as an ink or varnish, lead to only a moderate increase of the viscosity thereof and further lead to an excellently high mechanical resistance thereof, influenced by the polymer used. On account of these reasons, the compounds according to the present invention are particularly suitable to be used as ingredient of an energy curable ink composition or energy curable varnish composition, and in particular for those energy curable ink and energy curable varnish compositions being used for printing the non-food contact side or even the food-contact side of a food packing and in particular of a primary food packing.

A polymer is defined in accordance with the present invention as a substance consisting of molecules characterized by the sequence of one or more types of monomer units. Such molecules must be distributed over a range of molecular weights. Differences in molecular weight are primarily attributable to differences in the number of monomer units. A polymer molecule is a molecule that contains a sequence of at least 3 monomer units, which are covalently bound to at least one other monomer unit or another reactant.

In accordance with the present invention and in accordance with Article 3 (5) of the regulation of the Council on the Registration, Evaluation, Authorization and Restriction of Chemicals (REACH), a polymer is further defined as a substance meeting the following criteria:
a) Over 50 percent of the weight for that substance consist of polymer molecules and
b) the amount of polymer molecules presenting the same molecular weight must be less than 50 percent of the substance.

The feature that "one of R¹⁴ and R¹⁸ may be a bond and one of R⁸ to R¹² being adjacent to the one or two of the groups R⁸ to R¹² having the general formula (III) may be a bond being connected with the bond of R¹⁴ or R¹⁸ directly or by means of O, S, NH, NR⁷ with NR⁷ being as defined above or C(O)" means in accordance with the present invention that one of the groups R⁸ to R¹² may be covalently bonded (or connected directly, respectively) with one of the groups R¹⁴ and R¹⁸ or that one of the groups R⁸ to R¹² may be covalently bonded by means of an -O-bridge, -S-bridge, -NH-bridge, -NR⁷-bridge or -C(O)-bridge (i.e. connected indirectly) with one of the groups R¹⁴ to R¹⁸.

Furthermore, the feature that the groups "R¹⁶ and R¹⁷ are linked together to form a group comprising one or two rings, wherein this group is fused via one of the one or two rings to the group R¹³, wherein if the group comprises two rings the two rings are fused together, wherein each of the one or more rings is a substituted or unsubstituted five- or six-membered alicyclic hydrocarbon ring, a substituted or unsubstituted five- or six-membered aromatic hydrocarbon ring or a substituted or unsubstituted five- or six-membered heterocyclic ring" means in accordance with the present invention that the groups R¹⁶ and R¹⁷ form with the two carbon atoms of the group R¹³, to which they are bonded, a further five- or six-membered alicyclic hydrocarbon, aromatic hydrocarbon or a heterocyclic ring being fused to the group R¹³, wherein to this five- or six-membered alicyclic hydrocarbon, aromatic hydrocarbon or a heterocyclic ring an additional five- or six-membered alicyclic hydrocarbon, aromatic hydrocarbon or a heterocyclic ring may be fused or not. In other words, in the case that the groups R¹⁶ and R¹⁷ are linked together to form a group comprising (or consisting of) one ring, the group R¹³ and this one ring form a fused two-nuclei ring system (as in the case of the below general formula (VII)). In the case that the groups R¹⁶ and R¹⁷ are linked together to form a group comprising (or consisting of) two rings, the group R¹³ and these two rings form a fused three-nuclei ring system (as in the case of the below general formula (VI)).

In principle, the group R¹ in formula (I) may be any branched, linear, dendrimeric, graft or end-functionalized polymer. For example, these polymers could be end-functionalized with OH, SH, NH₂, COOH, CHO, NCO, COCI, SiOH, SO₃H, C=C, C=C or epoxy groups. Graft polymers are segmented copolymers with a linear backbone and randomly distributed branches or side-chains of another composite, covalently bound to the backbone. An example of a graft polymer being suitable for the present invention is the following structure:

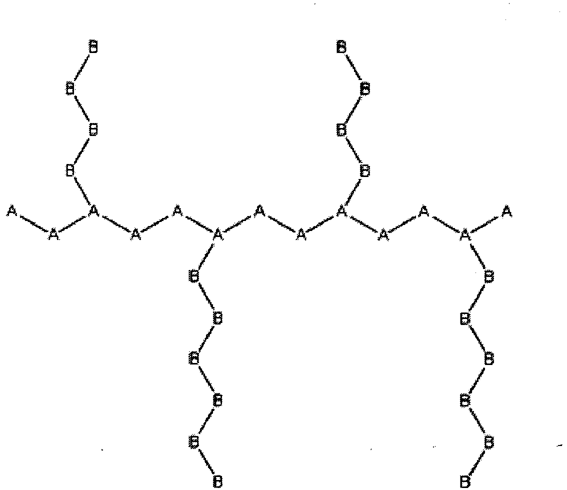

Graft polymers are in accordance with the present invention segmented copolymers with a linear backbone of one composite and randomly distributed branches of another composite. The picture above shows how grafted chains of species B are covalently bonded to polymer species A. Although the side chains are structurally distinct from the main chain, the individual grafted chains may be homopolymers or copolymers. Graft polymers have been synthesized for many decades and are especially used as impact resistant materials, thermoplastic elastomers, compatibilizers or emulsifiers for the preparation of stable blends or alloys. One of the more well-known examples of a graft polymer is high impact polystyrene, which consists of a polystyrene backbone with polybutadiene grafted chains.

A graft copolymer is in accordance with the present invention a type of copolymer in which one or more blocks of homopolymer are grafted as branches onto a main chain, meaning it is a branched copolymer with one or more side chains of a homopolymer attached to the backbone of the main chain. Thus, a graft copolymer is a polymer which contains in its individual macromolecules sequences of two different polymers, such as sequence Aₙ and sequence Bm. As such, a graft copolymer encompasses properties being intermediate between those of polymers Aₙ and Bₘ. It may also exhibit some of the specific properties of each of these polymers. Graft copolymers can be considered as polymeric alloys.

Dendrimers are in accordance with the present invention highly branched, spherical macromolecules with many symmetrically arranged side chains, which originate from a central core. An example for a dendrimeric polymer is shown below:

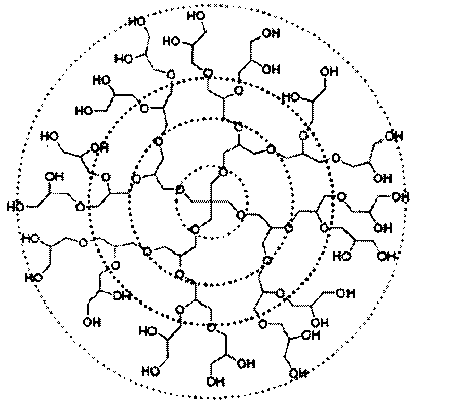

Good results are in particular obtained, when the group R¹ in formula (I) has a weight-average molecular weight of 200 to 10,000 g/mol, preferably of 300 to 8,000 g/mol and more preferably of 500 to 5,000 g/mol. Such a polymer leads to a sufficiently low migration potential and extractability of the compound having the general formula (I), but does not undesirably increase after its addition to an energy curing composition the viscosity of an energy curing composition, such as in particular an energy curing varnish or ink. In accordance with the present invention, the weight-average molecular weight of polymers is determined by gel permeation chromatography using a polystyrene standard and a sample concentration of 50 to 70 mg in 10ml tetrahydrofuran (THF), wherein the column temperature is 30 °C, the temperature of the Ri-Detector (refractive index) is 35 °C and the flow rate 1 ml/min.

In accordance with a particular preferred embodiment of the present invention, the group R1 in formula (I) is a dendrimeric polymer and particularly one having a weight-average molecular weight of 200 to 10,000 g/mol, preferably of 300 to 8,000 g/mol and more preferably of 500 to 5,000 g/mol. Compounds having the formula (I) with a group R1 being a dendrimeric polymer lead after addition to a composition, such as an energy curing varnish or ink composition, to a lower viscosity compared to respective compositions including the same amount of photoinitiator with the formula (I) having instead of the dendrimeric polymer a linear or branched or grafted polymer, even if it has the same weight-average molecular weight.

Suitable examples for the polymer group R¹ in formula (I) are polymers, which are selected from the group consisting of polyesters, polyamides, polycarbonates, polyurethanes, polyurea polyurethanes, functional saturated and unsaturated polyolefines, polyethers, polyimides, polyester amines, polyamines, polyvinylalcohols, polyvinylethers, polyvinylamines, polyvinylhalides, polyimines, polystyrenes, silicones, shellac, lignin, cellulose, dammar, rosin, rosin resins, and novolac compounds. Particular good results are obtained with polyethers, polycarbonates, polyamides, polyurethanes and polyurea polyurethanes having the aforementioned weight-average molecular weight.

In a further development of the idea of the present patent application, it is suggested that the polymer group R¹ in formula (I) is a polycarbonate, more preferably a dendrimeric polycarbonate and most preferably a dendrimeric polycarbonate having the aforementioned weight-average molecular weight. Such compounds according to the formula (I) containing a polycarbonate group R¹ and more preferably a dendrimeric polycarbonate group R¹ lead after addition to a composition, such as an energy curing coating composition, particularly an energy curing varnish or ink composition, to a composition having an excellently high mechanical resistance.

Polycarbonates comprise repeating units according to the following formula -(O-R-O-C(O))ₓ-O-, wherein preferably R is a C₆₋₂₀-aryl group (such as a phenyl group or a benzyl group), or a linear C₁₋₂₀-alkyl group (such as an ethyl group), a branched C₁₋₂₀-alkyl group (such as a hexylethyl group), a linear C₁₋₂₀-alkenyl group (such as an ethylene group) or a branched C₁₋₂₀-alkenyl group (such as a hexylethylene group), and wherein preferably x is the repeating number, such as an integer of at least 10 and preferably of at least 100 or of at least 500 or of at least 1,000.

In accordance with a further particular preferred embodiment of the present invention, the polymer group R¹ in formula (I) comprises at least one terminal unsaturated group, preferably 2 to 9 terminal unsaturated groups, more preferably 2 to 6 terminal unsaturated groups and most preferably 2 to 4 terminal unsaturated groups. One or more such terminal groups allow(s) the compound having the formula (I) or its photolysis product to copolymerize during the polymerization reaction, which is initiated by the compound in accordance with the present invention after having absorbed visible light or ultraviolet radiation, into the polymer formed by the monomers and thus to immobilize the photoinitiator compound in the polymer network of the composition, such as cured varnish composition or cured ink composition. Good results are in particular obtained, when the polymer group R¹ in formula (I) comprises at least one terminal ethylenically unsaturated group, preferably 2 to 9 terminal ethylenically unsaturated groups, more preferably 2 to 6 terminal ethylenically unsaturated groups and most preferably 2 to 4 terminal ethylenically unsaturated groups. Even more preferably, the polymer group R¹ in formula (I) comprises at least one terminal acryl group, preferably 2 to 9 terminal acryl groups, more preferably 2 to 6 terminal acryl groups and most preferably 2 to 4 terminal acryl groups.

In accordance with the present invention, in formula (I) the index m is an integer of 1 to 10. Preferably, m is an integer of 2 to 6, more preferably of 2 to 4 and most preferably of 4. This leads to a comparably high density of photoinitiating groups, however, without being so high that the photoinitiating groups negatively influence each other. These embodiments are in particular preferred, when the polymer group R¹ is a dendrimeric or branched polymer and in particular a dendrimeric or branched polycarbonate polymer.

In accordance with the present invention, in formula (I) group X is a bond or a non-hydrolysable linking group, e.g. O, S, an urethane group, a urea group, an amide group, CH2-CH=CH, NH or NR⁷, with R⁷ being a branched or linear C₁₋₁₀-alkyl group, or a branched or linear C₁₋₁₀-alkenyl group. Preferably, the group X in formula (I) is O or a bond and most preferably the group X in formula (I) is O.

The (CH₂)ₙ-group may be according to the present invention in formula (I) present (namely if n is at least one) or not (namely if n is zero).

In accordance with a first variant of the present patent application, the (CH₂)ₙ-group is present. In this variant, n is an integer of 1 to 10, preferably of 1 to 5, more preferably of 1 to 3, even more preferably of 1 or 2 and most preferably of 1.

In accordance with a second variant of the present patent application, the (CH₂)ₙ-group is not present, i.e. n is zero

According to the present invention, in formula (I) one or two of the groups R² to R⁶ are a group with the general formula (II). Preferably, in formula (I) one of the groups R² to R⁶ is a group with the general formula (II), whereas the remaining of the groups R² to R⁶ are independently from each other selected from H, a branched or linear C₁₋₁₀-alkyl group, or a branched or linear C₁₋₁₀-alkenyl group. Moreover, it is preferred that the remaining of the groups R² to R⁶ are independently from each other selected from H and a branched or linear C₁₋₈-alkyl group and more preferably are H.

In a further development of the idea of the present patent application, it is suggested that the group with the general formula (II) is arranged in the compound having the general formula (I) in the respective aromatic ring in para-position to the (CH₂)ₙ-X-R¹-group, i.e. that in the general formula (I) group R⁴ is a group with the general formula (II). The remaining groups R², R³, R⁵ and R⁶ are independently from each other selected from H, a branched or linear C₁₋₁₀-alkyl group, or a branched or linear C₁₋₁₀-alkenyl group. Preferably, the remaining groups R², R³, R⁵ and R⁶ are independently from each other selected from H and a branched or linear C₁₋₈-alkyl group and more preferably are H.

According to the present invention, in formula (I) one or two of the groups R⁸ to R¹² in formula (II) is/are a photoreactive group(s) having the general formula (III). Preferably, in formula (II) one of the groups R⁸ to R¹² is a photoreactive group having the general formula (III), whereas all of the remaining R⁸ to R¹² are independently from each other selected from H, a branched or linear C₁₋₁₀-alkyl group, or a branched or linear C₁₋₁₀-alkenyl group, wherein furthermore one of R¹⁴ and R¹⁸ may be a bond and one of R⁸ to R¹² being adjacent to the one of the groups R⁸ to R¹² having the general formula (III) may be a bond being connected with the bond of R¹⁴ or R¹⁸ directly or by means of O, S, NH, NR⁷ with NR⁷ being as defined above or C(O). Preferably, all of the remaining R⁸ to R¹² are independently from each other selected from H, and a branched or linear C₁₋₈-alkyl group, wherein furthermore one of R¹⁴ and R¹⁸ may be a bond and one of R⁸ to R¹² being adjacent to the one of the groups R⁸ to R¹² having the general formula (III) may be a bond being connected with the bond of R¹⁴ or R¹⁸ directly or by means of O, S, NH, NR⁷ with NR⁷ being as defined above or C(O). More preferably, the remaining of the groups R⁸ to R¹² are H.

Good results are in particular obtained, when the photoreactive group having the general formula (III) is arranged in para-position to the aromatic ring comprising the (CH₂)ₙ-X-R¹-group, i.e. that in the general formula (II) R¹⁰ is a group with the general formula (III). The para-position is for electronic and sterical reasons preferred and leads to higher curing speeds and curing efficiencies.

In a further development of the idea of the present patent application, it is suggested that in the general formula (II) one of the groups R⁸ to R¹² is a group with the general formula (III) and one of the groups R¹⁴ and R¹⁸ is a bond and one of the groups R⁸ to R¹² being adjacent to the one of the groups R⁸ to R¹² having the general formula (III) is a bond being connected with the bond of R¹⁴ or R¹⁸ directly or by means of O, S, NH, NR⁷ with NR⁷ being as defined above or C(O). The other four of these groups R⁸ to R¹² being different from that of the general formula (III) and that of bond, O-, S-, NH, NR⁷ with NR⁷ being as defined above or C(O)- are independently from each other selected from H, a branched or linear C₁₋₁₀-alkyl group, or a branched or linear C₁₋₁₀-alkenyl group. More preferably, the other four groups are independently from each other selected from H, a branched or linear C₁₋₈-alkyl group and even more preferably, the other four groups are H.

Particularly preferred is that in the general formula (II) R¹⁰ is a group with the general formula (III) and one of R¹⁴ and R¹⁸ is a bond and R⁹ or R¹¹ is a bond being connected with the bond of R¹⁴ or R¹⁸ directly or by means of O, S, NH, NR⁷ with NR⁷ being as defined above or C(O), wherein the remaining of R⁸ to R¹² are independently from each other selected from H, a branched or linear C₁₋₁₀-alkyl group, or a branched or linear C₁₋₁₀-alkenyl group, more preferably are independently from each other selected from H, a branched or linear C₁₋₈-alkyl group and even more preferably are H.

In accordance with an alternative preferred embodiment of the present invention, in the formula (II) two of the groups R⁸ to R¹² are a photoreactive group having the general formula (III), whereas the remaining of the groups R⁸ to R¹² are independently from each other selected from H, a branched or linear C₁₋₁₀-alkyl group, or a branched or linear C₁₋₁₀-alkenyl group. Preferably, the remaining of the groups R⁸ to R¹² are independently from each other selected from bond, H and a branched or linear C₁₋₈-alkyl group and more preferably the remaining of the groups R⁸ to R¹² are H.

In a particular preferred variant of this embodiment of the present invention, in the general formula (II) the groups R⁹ and the R¹⁰ or groups R¹⁰ and R¹¹ are a photoreactive group with the general formula (III), wherein the respective groups R⁹ and R¹⁰ or R¹⁰ and R¹¹ are connected with any of adjacent two of the groups R¹⁴ to R¹⁸ of the aromatic ring of the formula (IV), whereas the remaining of the groups of R⁸ to R¹² are independently from each other selected from H, a branched or linear C₁₋₁₀-alkyl group, or a branched or linear C₁₋₁₀-alkenyl group. In this embodiment, preferably the remaining groups of R⁸ to R¹² are independently from each other selected from H and a branched or linear C₁₋₈-alkyl group and most preferably are H.

In accordance with a particular preferred embodiment of the present invention, in the general formula (I):
X is O or a bond and most preferably X is O,
n is 1,
R⁴ is a group with the general formula (II),
R¹⁰ is a group with the general formula (III),
R², R³, R⁵, R⁶, R⁸, R⁹, R¹¹ and R¹² are independently from each other selected from H, a branched or linear C₁₋₁₀-alkyl group, and a branched or linear C₁₋₁₀-alkenyl group and
R¹⁴ to R¹⁸ are defined as described above,
wherein furthermore one of R¹⁴ and R¹⁸ may be a bond and R⁹ or R¹¹ may be a bond being connected with the bond of R¹⁴ or R¹⁸ directly or by means of O, S, NH, NR⁷ with NR⁷ being as defined above or C(O).

According to a first variant of this embodiment, groups R², R³, R⁵, R⁶, R⁸, R⁹, R¹¹ and R¹² are independently from each other selected from H, a branched or linear C₁₋₁₀-alkyl group, and a branched or linear C₁₋₁₀-alkenyl group and more preferably are H. Accordingly, the compound of this first variant of this embodiment has the general formula (Va): 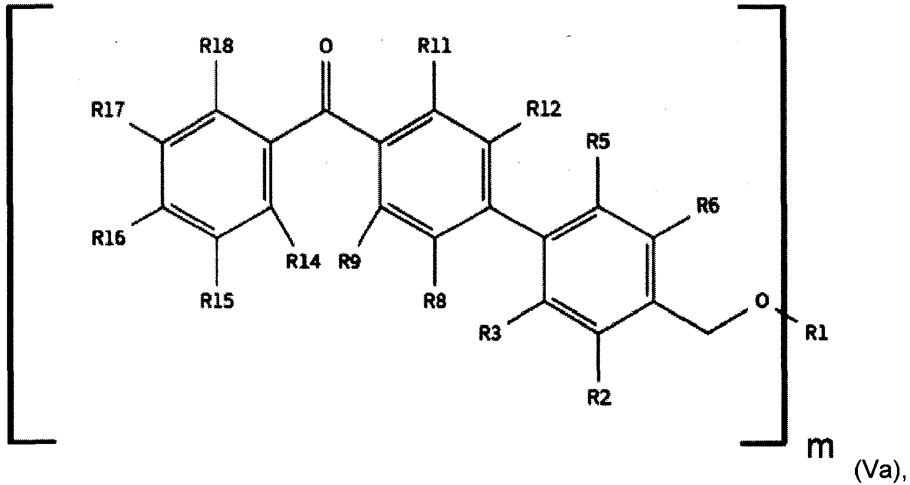 wherein
the groups R², R³, R⁵, R⁶, R⁸, R⁹, R¹¹ and R¹² are independently from each other selected from H, a branched or linear C₁₋₁₀-alkyl group, and a branched or linear C₁₋₁₀-alkenyl group, preferably are independently from each other selected from H, and a branched or linear C₁₋₈-alkyl group and more preferably are H, and groups R¹⁴ to R¹⁸ are R¹⁴, R¹⁵ and R¹⁸ are independently from each other selected from H, a branched or linear C₁₋₁₀-alkyl group, and a branched or linear C₁₋₁₀-alkenyl group,
R¹⁶ and R¹⁷ are independently from each other selected from H, a branched or linear C₁₋₁₀-alkyl group, and a branched or linear C₁₋₁₀-alkenyl group or wherein R¹⁶ and R¹⁷ are linked together to form a group comprising one or two rings, wherein this group is fused via one of the one or two rings to the group R¹³, wherein if the group comprises two rings the two rings are fused together, wherein each of the one or more rings is a substituted or unsubstituted five- or six-membered alicyclic hydrocarbon ring, a substituted or unsubstituted five- or six-membered aromatic hydrocarbon ring or a substituted or unsubstituted five- or six-membered heterocyclic ring.

According to a second variant of this embodiment, the groups R², R³, R⁵, R⁶, R⁸ and R¹² are independently from each other selected from H, a branched or linear C₁₋₁₀-alkyl group, and a branched or linear C₁₋₁₀-alkenyl group, preferably are independently from each other selected from H, and a branched or linear C₁₋₈-alkyl group and more preferably are H, whereas one of R¹⁴ and R¹⁸ is a bond and one of R⁹ and R¹¹ is a bond being connected with the bond of R¹⁴ or R¹⁸ directly or by means of O, S, NH, NR⁷ with NR⁷ being as defined above or C(O), wherein the remaining of the groups R¹⁵ to R¹⁸ are defined as described above, and wherein the other of R⁹ and R¹¹ is H is selected from H, a branched or linear C₁₋₁₀-alkyl group, and a branched or linear C₁₋₁₀-alkenyl group, preferably is selected from H, and a branched or linear C₁₋₈-alkyl group and more preferably is H. Accordingly, the compound of this second variant of this embodiment has the general formula (Vb): 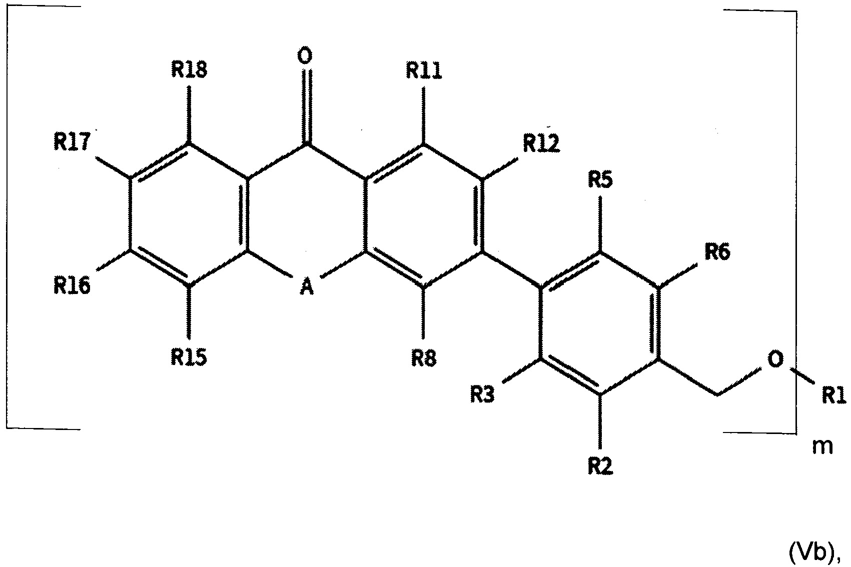 wherein
A is a bond, O, S, NH, NR⁷ with NR⁷ being as defined above or C(O) and the other groups R², R³, R⁵, R⁶, R⁸, R¹¹, R¹², R¹⁵, R¹⁶, R¹⁷ and R¹⁸ are defined as described above.

According to a third variant of this embodiment the aforementioned formula (Va) is modified by avoiding an oxygen bridge between (CH₂)ₙ and R₁, i.e. by the provision that X is a bond instead of O.

According to a fourth variant of this embodiment the aforementioned formula (Vb) is modified by avoiding an oxygen bridge between (CH₂)ₙ and R₁, i.e. by the provision that X is a bond instead of O.

In accordance with the present invention, in the general formulae (IV) and (Va) each of the groups R¹⁴ to R¹⁸ and in the general formula (Vb) each of the groups R¹⁵ to R¹⁸ is independently from each other selected from H, a branched or linear C₁₋₁₀-alkyl group, wherein R¹⁶ and R¹⁷ may be further linked together to form a group comprising one or two rings, wherein this group is fused via one of the one or two rings to the group R¹³, wherein if the group comprises two rings the two rings are fused together, wherein each of the one or more rings is a substituted or unsubstituted five- or six-membered alicyclic hydrocarbon ring, a substituted or unsubstituted five- or six-membered aromatic hydrocarbon ring or a substituted or unsubstituted five- or six-membered heterocyclic ring, and wherein furthermore one of R¹⁴ and R¹⁸ may be a bond and one of R⁸ to R¹² being adjacent to the one or two of groups R⁸ to R¹² having the below general formula (III) may be a bond being connected with the bond of R¹⁴ or R¹⁸ directly or by means of O, S, NH, NR⁷ with NR⁷ being as defined above or C(O).

In accordance with a preferred embodiment of the present invention, in the general formulae (IV), (Va) and (Vb) as well as in the modified formulae (Va) and (Vb) according to the aforementioned third and fourth variants, in which X is a bond, the groups R¹⁴ to R¹⁸ are independently from each other selected from H, a branched or linear C₁₋₁₀-alkyl group, and a branched or linear C₁₋₁₀-alkenyl group. In this embodiment, it is more preferred that groups R¹⁴ to R¹⁸ are independently from each other selected from H or a branched or linear C₁₋₈-alkyl group and even more preferably, all groups R¹⁴ to R¹⁸ are H.

In accordance with a further particular preferred embodiment of the present invention, in the general formula (III) R¹³ has the following general formula (VI): 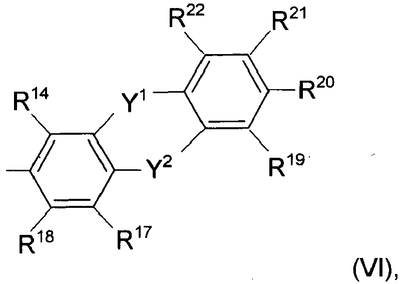 wherein
Y¹ and Y² are independently from each other bond, CH₂, CO, O, S, NH, NR⁷ with NR⁷ being as defined above and
R¹⁴, R¹⁷, R¹⁸ and R¹⁹ to R²² are independently from each other selected from H, a branched or linear C₁₋₁₀-alkyl group, or a branched or linear C₁₋₁₀-alkenyl group.

In a further development of the idea of the present patent application, it is suggested that in the aforementioned embodiment in the general formula (VI), groups Y¹ and Y² are selected as follows:
i) Y¹ and Y² are CO,
ii) one of Y¹ and Y² is CO and the other one is S,
iii) one of Y¹ and Y² is CH₂ and the other one is CO,
iv) one of Y¹ and Y² is a bond and the other one is NH or NR⁷ with NR⁷ being as defined above,
v) one of Y¹ and Y² is a bond and the other one is CO,
vi) Y¹ and Y² are O or
vii) one of Y¹ and Y² is CH₂ and the other one is O.

It is further preferred that in this embodiment in the general formula (VI) the groups R¹⁴, R¹⁷, R¹⁸ and R¹⁹ to R²² are independently from each other selected from H and a branched or linear C₁₋₈-alkyl group.

Good results are in particular obtained, when in the general formula (VI) the groups R¹⁴, R¹⁷, R¹⁸ and R¹⁹ to R²² are H.

In accordance with an alternative particular preferred embodiment of the present invention, in in the general formula (III) R¹³ has the following general formula (VII): 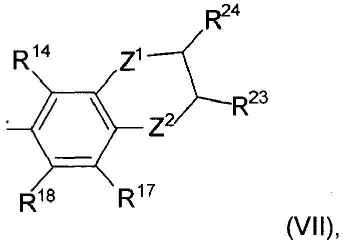 wherein
Z¹ and Z² are independently from each other CH₂, O, S, NH, NR⁷ with NR⁷ being as defined above,
R¹⁴, R¹⁷ and R¹⁸ are independently from each other selected from H, a branched or linear C₁₋₁₀-alkyl group, or a branched or linear C₁₋₁₀-alkenyl group and R²³ to R²⁴ are independently from each other selected from H, =O, a branched or linear C₁₋₁₀-alkyl group, or a branched or linear C₁₋₁₀-alkenyl group.

Good results are in particular obtained, when in the general formula (VII) Z¹ is O and Z² is CH₂.

It is further preferred that in this embodiment in the general formula (VII) the groups R¹⁴, R¹⁷ and R¹⁸ are independently from each other selected from H, or a branched or linear C₁₋₈-alkyl group, and the groups R²³ and R²⁴ are independently from each other selected from H, =O, and a branched or linear C₁₋₈-alkyl group.

More preferably, in the general formula (VII) both of the groups R²³ and R²⁴ are =O and the groups R¹⁴, R¹⁷ and R¹⁸ are H.

In accordance with an alternative particular preferred embodiment of the present invention, in the general formula (III) R¹³ has the following general formula (VIII): 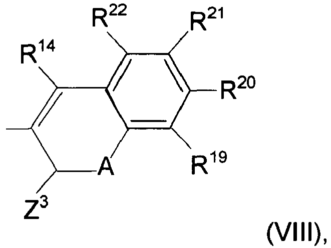 wherein
A is CH₂, O, S, NH or NR⁷ with NR⁷ being as defined above,
Z³ is O, S, OH, SH, branched or linear C₁₋₈-alkyl group or NR⁷H, N(R⁷)₂ with R⁷ being as defined above,
R¹⁴ is selected from H, a branched or linear C₁₋₁₀-alkyl group, or a branched or linear C₁₋₁₀-alkenyl group and
R¹⁹ to R²² are independently from each other selected from H, =O, a branched or linear C₁₋₁₀-alkyl group, or a branched or linear C₁₋₁₀-alkenyl group.

Good results are in particular obtained, when in the general formula (VIII) A is O and Z³ is O, Z³ in this case being linked by a double bond.

It is further preferred that in this embodiment in the general formula (VIII) the groups R¹⁴ and R¹⁹ to R²² are independently from each other selected from H and a branched or linear C₁₋₈-alkyl group.

Good results are in particular obtained, when in the general formula (VIII) the groups R¹⁴ and R¹⁹ to R²² are H.

Most preferably, in this embodiment, X in the general formula (I) is O.

Particular suitable compounds according to the present invention are the following:

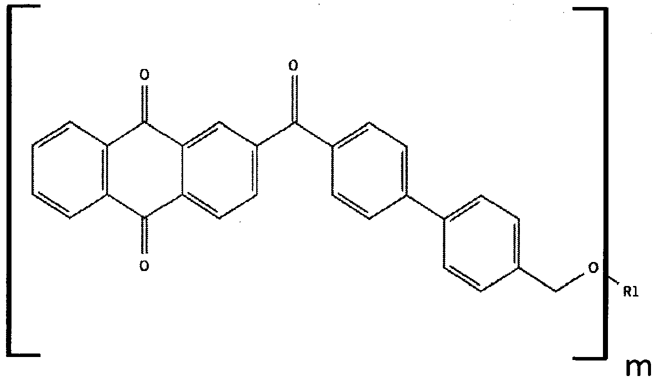

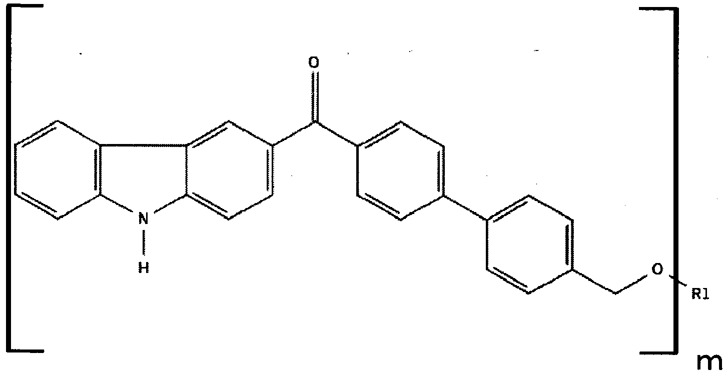

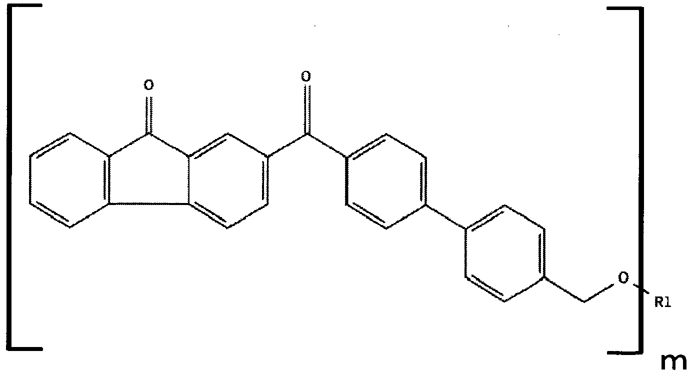

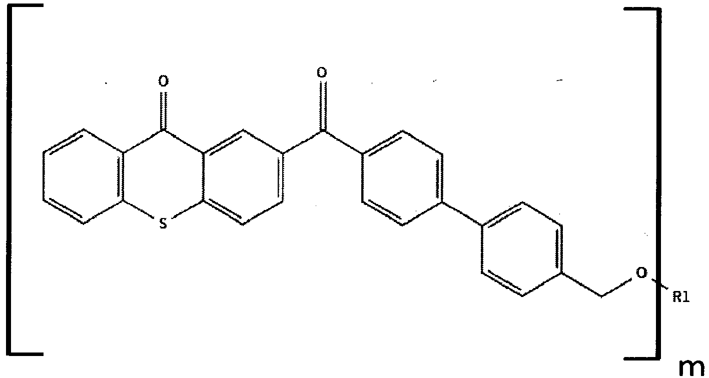

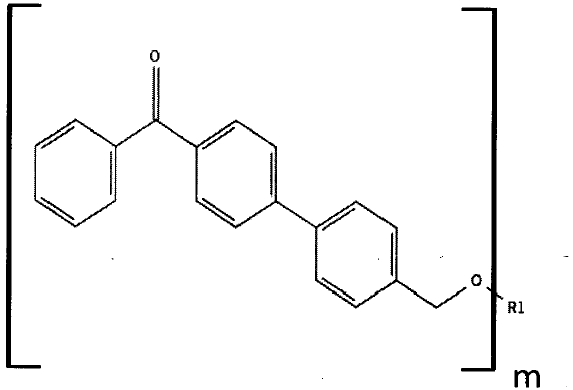

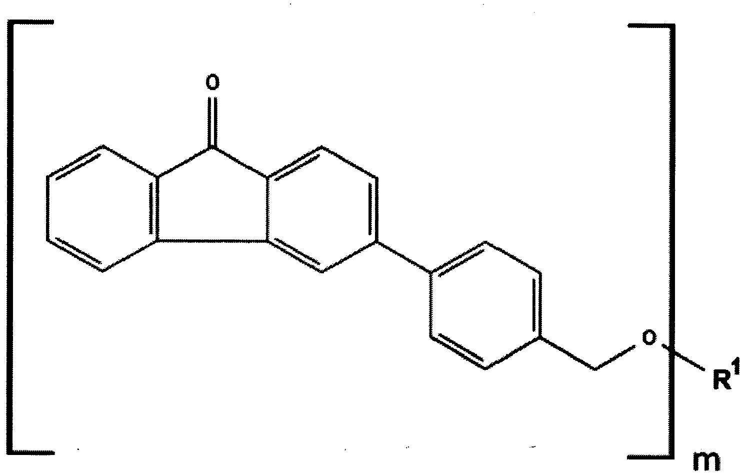

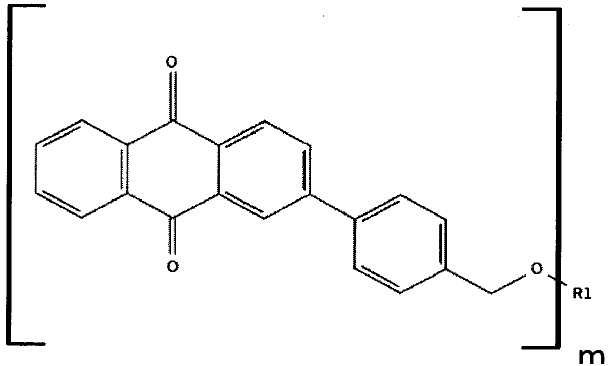

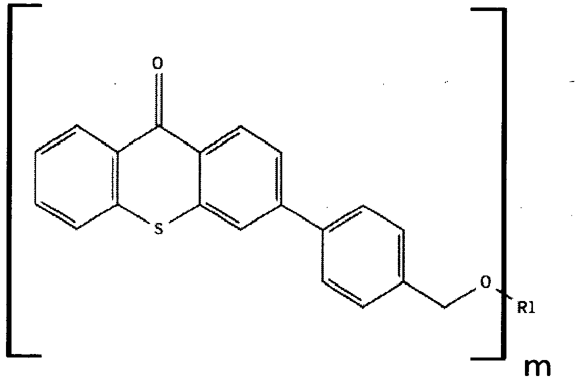

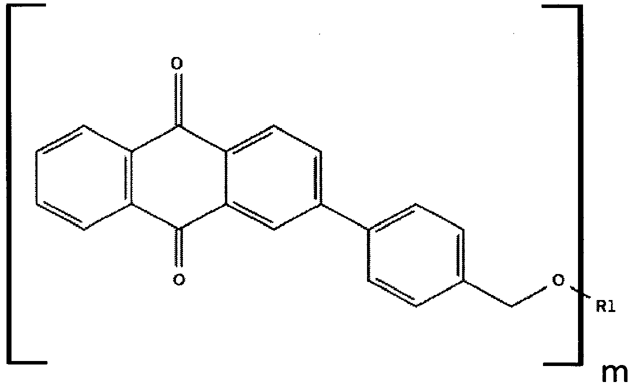

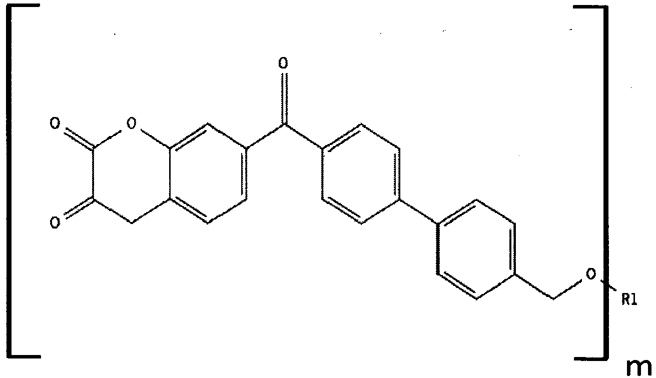

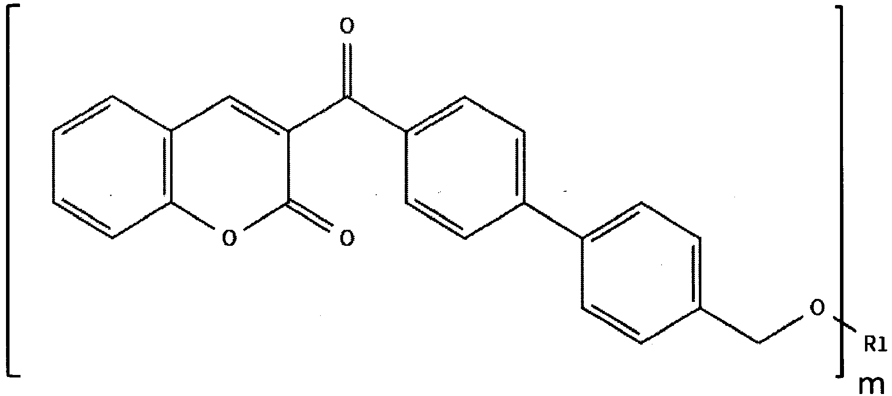

In accordance with a further aspect, the present patent application refers to an energy curable ink composition or energy curable varnish composition containing:
a) at least one binder,
b) at least one ethylenically unsaturated compound selected from monomers and/or oligomers and
c) as photoinitiator an aforementioned described compound.

Preferably, the energy curable ink composition or energy curable varnish composition in accordance with the present invention contains, depending on the ink film thickness and the type of ink, 10 to 90% by weight of binder based on the total weight of the energy curable ink composition or energy curable varnish composition. The present invention is not particularly limited concerning the kind of binder included in the energy curable ink composition or energy curable varnish composition. However, it is preferred that the binder is selected from the group consisting of radiation curing, ethylenically unsaturated binders, and optionally inert binders without vinyl functionality. It is especially preferred that the binder is selected from the group consisting of polyether acrylates, polyester acrylates, chlorinated polyesteracrylates, polyurethane acrylates, epoxy acrylates, polymethacrylates, polystyrenes, styrene resins, polyvinylidene fluoride resins, hydrocarbon resins, maleic resins, saturated polyesters, silicone resins, olefinic resins, polyethers, polyurethanes, polyamides, polyacrylates, collophonium resins, ketonic resins, alkyd resins, collophonium modified phenolic resins, silicates, silicones, silanes, phenolic resins, urea resins, melamine resins, polyterpene resins, polyvinylalcohols, polyvinylacetates, polyvinylchloride, polyvinylethers, polyvinylpropionates, polymethacrylates, polystyrenes, polyolefines, coumarone-indene resins, aromatic formaldehyde resins, carbamide acid resins, sulfonamide resins, chlorinated resins, CAB (cellulose acetate butyrate), CAP (cellulose acetate propionate), cellulose compounds, rubbers, lignin derivatives, and arbitrary combinations of two or more of the aforementioned binders.

In addition to the binder or instead of the binder, the energy curable ink composition or energy curable varnish composition may contain more than 0 to 100% by weight of ethylenically unsaturated monomers, such as acrylic, methacrylic or vinyl functional monomers. Preferably, the at least one ethylenically unsaturated compound selected from monomers and/or oligomers is selected from the group consisting of acrylates, such as diacrylates or dimethacrylates of diols and polyetherdiols, such as propoxylated neopentyl glycol diacrylate, 1,6-hexanediol diacrylate, dipropylene glycol diacrylate (DPGDA), tripropylene glycol diacrylate (TPGDA), diethylene glycol diacrylate, triethylene glycol diacrylate, triethylenglycol dimethacrylate, 1,4-butanediol diacrylate (e.g, SR213), alkoxylated aliphatic diacrylate (e.g. SR9209A), alkoxylated hexanediol diacrylate (e.g, SR561, SR562, SR563, SR564 from Sartomer Co., Inc), polyethylene glycol (200) diacrylate (SR259), and polyethylene glycol (400) diacrylate (SR344) polyether glycol-200-diacrylate, polyether glycol-400- diacrylate, polyether glycol-600-diacrylate, polyether glycol-800-diacrylate, poly- etherglycol-1000-diacrylate, polyolpolyacrylate, PEG300-diacrylate, PPG700DA polypropyleneglycol (700) diacrylate, (12)PO(6)EODMA ethoxylated (6), propoxylated (12) dimethacrylate, BPA3EODA ethoxylated (3) bisphenol-A- diacrylate, BPA10EODMA ethoxylated (10) bisphenol-A-dimethacrylate, and/or Laromer^{®} BDDA butanediol diacrylate, or higher functional acrylates such as trimethylolpropane triacrylate (TMPTA), ethoxylated trimethylolpropane triacrylate, TMP3EOTA ethoxylated (3) trimethylolpropane triacrylate, TMP6EOTA ethoxylated (6) trimethylolpropane triacrylate, TMP15EOTA ethoxylated (15), TMP20EOTA ethoxylated (20) trimethylolpropane triacrylate, propoxylated trimethylolpropane triacrylate, oligotriacrylate (OTA), pentaerythritol triacrylate, pentaerythritol(4)-propoxylated-triacrylate, pentaerythritol tetraacrylate, ethoxylated pentaerythrioltetraacrylate (PPTTA), neopentylglycol diacrylate, ethoxylated or propoxylated neopentylglycol, propoxylate (4) glycerol triacrylate, tri-functional monomers, such as Laromer types from BASF or Ebecryl 2047 or Ebecryl 12 from Allnex, di-trimethylolpropane tetraacrylate, dipentaerythritol-pentaacrylate (Di-PEPA), dipentaerythritol hexaacrylate (DPHA) and arbitrary combinations of two or more of the aforementioned substances. The amount of monomer and/or oligomer in the composition before curing is preferably between 1 and 70% by weight and more preferably between 5 and 50% by weight.

If the energy curable composition is an energy curable ink composition, it contains at least one pigment. Preferably the amount of pigment based on the total amount of the energy curable ink composition, i.e. the composition before curing, is preferably between 0 and 50% by weight and more preferably between 3 and 20% by weight. The cured ink composition preferably contains preferably between 0 and 50% by weight and more preferably between 3 and 20% by weight of pigment.

The amount of the photoinitiator compound according to this invention in the energy curable ink composition or energy curable varnish composition is preferably between more than 0 and 70% by weight, more preferably between 5 and 70% by weight and most preferably between 10 and 20% by weight based on the total weight of the energy curable ink composition or energy curable varnish composition.

In addition the photoinitiator compound can also be a mixture of the possible variations of the photoinitiator compound, e.g. of a polymeric phenyl-benzophenone compound in combination with a polymeric thioxanthone compound. Other suitable, low migrating or low extractable photoinitiators could also be used in combination with the photoinitiator compound according to this invention. Preferred is in any case the use of either one photoinitiator compound according to this invention or a combination of variations of the polymeric photoinitiator compound according to this invention.

Furthermore, the energy curable ink composition or energy curable varnish composition may contain one or more additives. Examples for such additives are those selected from the group consisting of rheological additives, adhesion promoters, defoamers, slip additives, wetting agents, levelling agents, gloss additives, waxes, wetting agents, curing agents, chelating agents, additional photoinitiators, amine synergists, inhibitors, desiccants, stabilizers, emulsifiers, abrasion resistance additives, plasticizers, antistatic additives, matting agents and arbitrary combinations of two or more of the aforementioned additives.

The energy curable ink composition or energy curable varnish composition may be formulated so as to be suitable for any known printing technique, such as offset, lithography, intaglio printing, flexographic printing, gravure printing, screen printing, digital printing, inkjet printing, pad printing, transfer printing, letter printing and the like.

Subsequently, the present invention is further described by means of illustrative, but non-limiting examples.

In the figures:
- Fig. 1: shows the extinction spectrum of the extraction solutions of example 2, wherein the dashed line is Varnish-1, the solid line is Varnish-2 with Resin-1 and the dash-dotted line is Varnish-3. The spectra displayed represent the average of three repetitions.
- Fig. 2.: shows the shear viscosity hysteresis for example 3 starting with shear rate 0.1 s-1 to 1 000 s-1 and backwards, wherein the squares are Ink-1, the crosses are Ink-2 and the pyramides are Ink-3.

### Examples

### Materials

All materials used for the synthesis were purchased from Sigma Aldrich as long as not further specified.
*Ebecryl 3420* low viscosity, modified epoxy acrylate from Allnex
*EOTMPTA* ethoxylated trimethylol propane triacrylate SR 454 from Sartomer *DPGDA* dipropylene gylcole diacrylate SR 508 from Sartomer
*HDDA* hexyldiol diacrylate from SR238 Sartomer
*Solsperse 39000* polymeric dispersant from Lubrizol
*EFKA SL3259* slip and leveling/wetting agent from BASF
*Laromer PO94F* amine modified polyether acrylate from BASF, synergist *Omnipol ASA* oligomeric (4-N,N-dimethylamino)benzoate derivative from IGM resins, synergist
*MOGUL E* carbon black from Cabot
*Omnirad 4PBZ* 4-phenyl benzophenone photoinitiator from IGM resins
*Omnipol TX* oligomeric thioxanthone from IGM resins

### Test methods

### HPLC

HPLC instrument: HP series 1100
HPLC column: Agilent Eclipse XDB-C18 5 µm 4.6 x 150 mm; room temperature, injection volume 3 µl, flow rate 1 ml/min, post time before start of next measurement 5 min.
Detection: UV detector

### Shear viscosity

The viscosity of the samples was determined using a Physica MCR 100 Rheometer from Anton Paar with a cone-plate geometry. The cone has a diameter of 50 mm and an angle of 1°. The gap of the cone and the plate was set to 0.05 mm. The viscosity was recorded against the shear rate starting with *γ̇* = 0.1 ... 1000 *s*⁻¹. The thixotropic behavior was tested recording a hysteresis curve.

### Determination of UV dosage

The UV dosage was measured with a high energy UV radiometer such as the UV Power Puck S/N 2345 from EIT.

Additionally, the intensity was monitored using intensity labels. New UV Intensity Labels N010-005 from UV Process Supply Inc. were used. The Lab values determined with help of a spectrophotometer were determined before and after the curing step. The dE value is a measure for the UV dosage.

### "Reactivity test" - Set-off test

For the Set-off test probes the degree of curing of a pigmented UV curable formulation was measured. With help of a Printability Testing Systems from Prüfbau the substrate (PVC film 240x45 mm Pentaprint white gloss PR-M 180/23 0.445 kg/m²) was coated with a 2 g/cm² ink layer. A UV curing system from AMS "Superproofer" equipped with a medium pressure mercury lamp from Baldwin (Serial Nr. 7804853) with 240 W/cm was used. The distance between the lamp and the substrate was set to 45 mm. After the curing the printed area was covered with a blank paper (bvs gloss white from Scheufelen GmbH & Co. KG 135 g/m²) and subjected to high pressure for a short time. The covered substrate passed an impression cylinder which has a fixed impression force of 1600 Nm. The amount of ink that has been transferred to the blank paper was assessed coloristically by means of a spectrophotometer such as Spectra Eye (X-Rite) or a Techkon device (SpectroDens).

The dE value with respect to the blank substrate is a measure for the amount of ink that has been transferred and consequently for the degree of curing. Varying the UV dosage provides a measure to estimate the curing kinetics of the UV curable ink.

### Extraction test and UV-vis method

For the extraction tests the varnish formulations were printed on BOPP (240 x 45 mm Treofan EWR 57 44,7 g/m²) using a Printability Testing Systems with an inline UV curing device from Prüfbau. The inline curing device had two UV chambers and was used with a belt speed of 0.1 m/s. Both chambers were equipped with a 1 kW mercury UV lamp emitting between 180 and 450 nm, both were set to 50% power. The UV dosage was monitored with intensity labels (dE 19.3 +/-1.0). Please see paragraph Determination of UV dosage. The weight of the printing cylinder was determined before and after the printing process to achieve a grammage of 1.6 +/-0.1 g/cm². For the extraction a 40 x 45 mm coated area was cut into smaller pieces (6 pieces) and immersed in a 10 mL Ethanol (96%) solution for two minutes. The extraction was employed 24 h after the printing process to include also post-curing processes. The ethanol extraction liquid was analyzed by means of UV-vis spectroscopy.

### Example 1

An example of a polymeric photoinitiator was synthesized according to the following 4 step synthesis:

### Step 1 has been performed according to the procedure as described in J. Am. Chem. Soc., 2014, 136, 14027-14030:

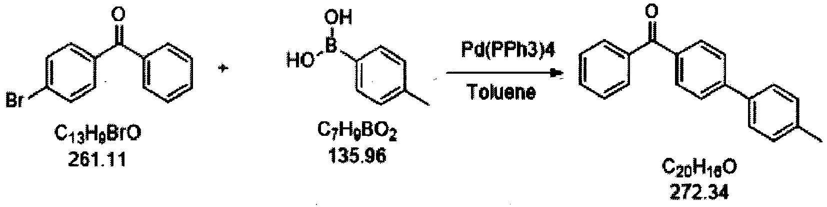

A 5 I three-necked roundbottom flask, equipped with thermometer, mechanical overhead stirrer, was charged with 12.5 g 4-Bromobenzophenone, 133.2 g p-tolylboronic acid, 128 g potassium carbonate and 3 I toluene. The mixture was purged with Nitrogen for one hour.

5 g Tetrakis(triphenylphosphine)palladium(0) catalyst was added. The reaction was carried out under continuous stirring at 75 °C. The reaction was monitored by HPLC. The retention time of the product was at 23.4 minutes. When the reaction was completed, the reaction mixture was cooled down to room temperature, filtered, washed with saturated brine and dried with K₂CO₃. Toluene was then removed by distillation under atmospheric pressure. The raw material was purified by passing through a silica gel column of 25 inches length and 6 inches diameter. As eluent 100% hexane was used for the first 15 minutes, followed by a mixture of 15 volume% ethyl acetate and 85 volume% hexane until a clean product was obtained as verified by HPLC. After evaporation of the solvent mixture the product was recrystallized with a mixture of 15 volume% ethylacetate and 85 volume% hexane and gave a yield of 112 g.

**Table 1. Eluent mixture: used water contains 5% TFA (trifluoro acetic acid)**

| **Time** | **Water / weight%** | **Acetonitrile / weigth%** |
|---|---|---|
| 10 minutes | 40 | 60 |
| 15 minutes | 30 | 70 |

### Step 2 has been performed according to Org. Synth., 2012, 89 55-65:

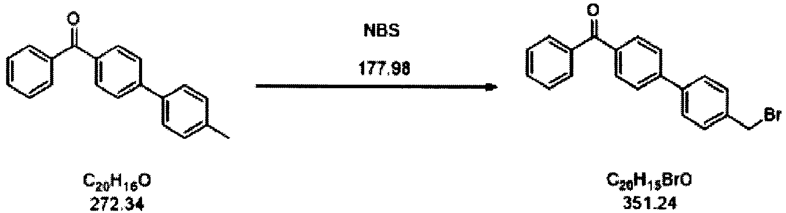

A 2 I three-necked roundbottom flask, equipped with thermometer and mechanical stirrer, was charged with 500 ml carbon tetrachloride, 56.7 g of the reaction product of step 1, 44.8 g of N-Bromosuccinimide (NBS) and 1.2 g of benzoyl peroxide. The reaction mixture was stirred at reflux for 16 hours until the reaction was completed. The reaction was monitored by HPLC. The retention time of the product was 7.8 minutes. After cooling down to room temperature, the solvent was removed by distillation. The resulting residue was purified through a silica gel column of 25 inches length and 6 inches diameter. As eluent pure hexane was used for 15 minutes, followed by a mixture of 15 volume% ethyl acetate and 85 volume% hexane until a clean product was obtained as verified by HPLC. After evaporation of the solvent mixture the reaction product was recrystallized several times with 25 volume% ethylacetate and 75 volume% hexane to give 50 g of a pale white solid.

### Step 3:

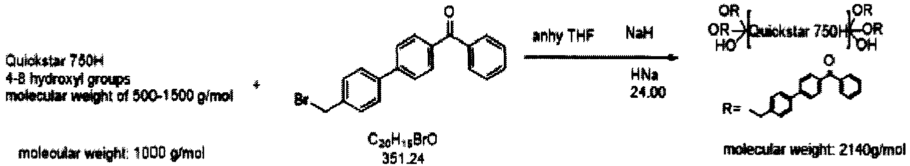

A 1 I three-necked roundbottom flask, equipped with thermometer, mechanical overhead stirrer, and a nitrogen purge tube, was charged with 17.75 g Quickstar 750H (IP Tech, a dendrimeric polyol with aliphatic polycarbonate core and hydroxyl functionality). Anhydrous tetrahydrofurane (THF) was charged and the resulting mixture cooled to 0 °C. 1.7 g of sodium hydride was added. After 2 hours a solution of 25 g of the reaction product of step 2 in 100 ml THF was added dropwise. The reaction was monitored again via HPLC according to the method described above.

### Step 4:

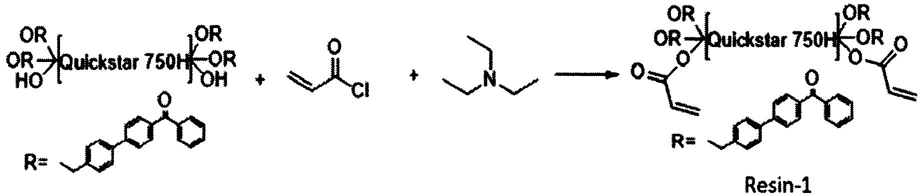

After HPLC, again according to the method described above, showed that reaction product of step 2 has reacted completely, 5.5 g triethylamine was added. The reaction mixture was cooled down to 0 °C. A solution of 4.9 g acryloylchloride in 50 ml THF was added dropwise. The reaction was again monitored by HPLC by the same method as described above. After the intermediate of step 3 was gone, THF was removed with help of a rotary evaporator. The residue was dissolved in dichloromethane, washed with water and saturated brine and subsequently dried over anhydrous sodium sulfate. After filtration, the product was concentrated on a rotary evaporator to give 34.1 g of Resin-1, a light yellow paste.

### Example 2

Application tests of Resin-1 were performed in a clear low viscosity coating. In each formulation the concentration of photoreactive centers was calculated to be the same. The mass concentration of photoreactive centers in Resin-1 and Omnipol TX was calculated from the extinction of the Resin and the molar extinction of the monomeric photoreactive precursors. The monomeric photoreactive precursor is the brominated 4-tolyl benzophenone (reaction product of Example 1 step 2) for Resin-1, and 2-carboxy methoxythioxanthone for Omnipol TX. The formulations were heated to 90 °C for 2 hours until a homogeneous solution was formed. Coated samples for the extraction were prepared as described above.

The extractability of type II photoinitiators out of a clear UV coating was employed using an extraction liquid and subsequent UV-vis spectroscopy. The characteristic UV-vis absorption of the photoinitiators can be employed to quantify the amount of photoinitiator that can be extracted from the printed product. It is most likely that the extraction liquid penetrates the entire UV coating. Hence the exposure to Ethanol (96%) can be regarded as a worst-case scenario in the life cycle of a printed product.

**Table 2. Recipe and extraction tests of a clear UV varnish**

| *Raw material description* | **Varnish-1** | **Varnish-2** | **Varnish-3** |
|---|---|---|---|
| | *Omnirad 4-PBZ* | *Resin-1* | *Omnipol TX* |
| *Laromer PO 94F* | 62.5 | 62.5 | 62.5 |
| *EOTMPTA* | 30.7 | 28.7 | 30.6 |
| *EFKA SL3259* | 1.0 | 1.0 | 1.0 |
| *Omnipol ASA* | 2.9 | 2.9 | 2.9 |
| *Omnirad 4-PBZ* | 3.0 | | |
| *Resin-1* | | 5.0 | |
| *Omnipol TX* | | | 3.1 |
| **Total** | **100.0** | **100.0** | **100.0** |
| *Max wavelength* / *nm* | 297 | 288 | 305 |
| *Extinction @λₘₐₓ* / *a.u.* | 0.064 | 0.038 | 0.093 |
| *Rel. Error* | 23% | 3% | 19% |

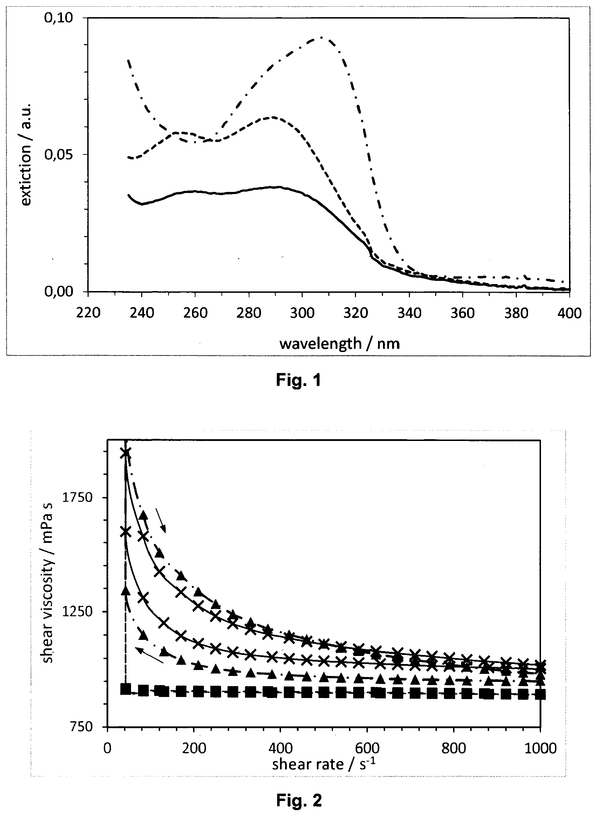

Table 2 contains the formulation of the varnishes and the results from UV-vis analysis of the extraction liquids. The whole spectra of the extraction liquids are displayed in fig. 1. It can be proven that the formulation containing Resin-1 reveals a reduced extraction (solid curve) of photoinitiators comparing with the sample containing the monomeric 4-PBZ. Also comparing with the Varnish-3 containing Omnipol TX (dashed-dotted line) Resin-1 show a significantly reduced extractability from the coating, limiting the exposure of the photoinitiator to the human and the environment after the coating was cured.

### Example 3

In this example the curing performance and rheological properties of Resin-1 from Example 1 were probed. A standard formulation for a flexographic printing ink was employed. The ink formulations were investigated by means of rheometry and set-off test described above.

The flexographic ink samples were prepared by direct grinding. The powders were predispersed in a mixture of an oligomeric acrylate and dispersing agent using a mechanical stirrer. Afterwards direct grinding was employed using a three roller mill (roller temperature was 30°C and 30 bar pressure). Afterwards the ink concentrate was mixed with monomeric acrylates.

Table 3 displays the recipe of the test formulations using Resin-1 from Example 1. Resin-1 was compared against monomeric 4-PBZ. The use of Resin-1 was calculated to have the same molar concentration of photoreactive centers in Ink-1 and Ink-2. For comparison reasons the formulation Ink-3 contains the state of the art oligomeric photoinitiator Omnipol TX. Omnipol TX was used with the same mass concentration as Resin-1. In this case, the same molar concentration of thioxanthone in the ink led to unsufficient drying, therefore the mass equivalent was chosen The "reactivity" of the formulation or in other words the curing speed was tested employing the set-off method. The results indicate that Resin-1 reveals a curing speed in the given formulation, which is quite close to monomeric 4-PBZ. One can observe a big gap in curing speed replacing Resin-1 with the state of the art polymeric photoinitiator Omnipol TX.

**Table 3. Formulation recipe and test results of a flexographic test formulation. The ink concentrate consists of Ebecryl 3420 25.9%; Solspere 39000 4.7%; UV Stabilizer 0.7%; Laromer PO94F 32.4%; Omnipol ASA 4.9% and Mogul E 29.2%.**

| | **Ink-1** | **Ink-2** | **Ink-3** |
|---|---|---|---|
| *Raw material description* | Omnirad 4PBZ | Resin-1 | Omnipol TX |
| *Ink Concentrate* | 55.9 | 55.9 | 55.9 |
| *Omnirad 4PBZ* | 5.0 | | |
| *Resin-1* | | 9.7 | |
| *Omnipol TX* | | | 9.7 |
| *Ebecryl 3420* | 8.1 | 0.0 | 0.7 |
| *DPGDA* | 11.1 | 16.8 | 16.8 |
| *HDDA* | 3.9 | 6.8 | 6.5 |
| *EOTMPTA* | 16.0 | 10.8 | 10.4 |
| | | | |
| Total | 100.0 | 100.0 | 100.0 |
| | | | |
| ***Shear viscosity* @ *1000 s⁻¹* / *mPa s*** | 895 | 1022 | 982 |
| | | | |
| ***Set-off Test*** | | | |
| *dE @375 mJ*/*cm^{2[1]} dE 11.6* +/-*0.7^{[2]}* | 0.2 | 0.1 | 0.5 |
| *dE @280 mJ*/*cm^{2[1]} dE 8.7*+/-*0.7^{[2]}* | 0.1 | 0.2 | 3.4 |
| [1] determined with a UV Power Puck [2] determined with New UV Intensity labels according to the paragraph Determination of UV dosage | | | |

A flexographic ink requires rheological properties that are close to Newtonian liquids. Fig. Fig.2 displays the hysteresis curve of the shear viscosity versus the shear rate. Ink-1 containing the monomeric 4-PBZ shows the rheological properties of an almost Newtonian liquid. Typically the use of polymeric Photoinitiators induce shear thinning and thixotropic properties. The hysteresis curve area of Ink 2 is smaller comparing with Ink-3. This suggests that Resin-1 is less shear thinning and less thixotropic in the given ink formulation comparing to Omnipol TX. One explanation for this observation might be the dendrimeric structure of the polymeric core in Resin-1.

## Claims

1. A compound having the following general formula (I): 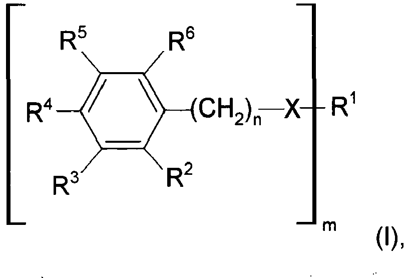 wherein:
R¹ is a polymer,
X is a bond or a non-hydrolysable linking group, e.g. O, S, a urethane group, a urea group, an amide group, CH₂-CH=CH, NH or NR⁷, with R⁷ being a branched or linear C₁₋₁₀-alkyl group, or a branched or linear C₁₋₁₀-alkenyl group,
m is an integer between 1 and 20,
n is an integer between 0 and 10,
R² to R⁶ are independently from each other selected from H, a branched or linear C₁₋₁₀-alkyl group, or a branched or linear C₁₋₁₀-alkenyl group, provided that one or two of the groups R² to R⁶ have the following general formula (II): 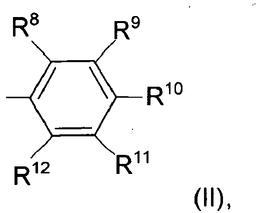
wherein:
one or two of the groups R⁸ to R¹² have the below general formula (III), wherein all of the remaining R⁸ to R¹² are independently from each other selected from H, a branched or linear C₁₋₁₀-alkyl group, or a branched or linear C₁₋₁₀-alkenyl group,
C(O)-R¹³- (III),
wherein:
R¹³ has the following general formula (IV): 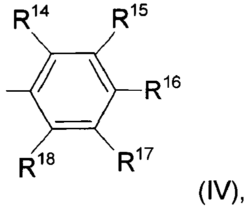 wherein:
R¹⁴, R¹⁵ and R¹⁸ are independently from each other selected from H, a branched or linear C₁₋₁₀-alkyl group, and a branched or linear C₁₋₁₀-alkenyl group,
R¹⁶ and R¹⁷ are independently from each other selected from H, a branched or linear C₁₋₁₀-alkyl group, and a branched or linear C₁₋₁₀-alkenyl group or wherein R¹⁶ and R¹⁷ are linked together to form a group comprising one or two rings, wherein this group is fused via one of the one or two rings to the group R¹³, wherein if the group comprises two rings the two rings are fused together, wherein each of the one or more rings is a substituted or unsubstituted five- or six-membered alicyclic hydrocarbon ring, a substituted or unsubstituted five- or six-membered aromatic hydrocarbon ring or a substituted or unsubstituted five- or six-membered heterocyclic ring, and
wherein furthermore one of R¹⁴ and R¹⁸ may be a bond and one of R⁸ to R¹² being adjacent to the one or two of the groups R⁸ to R¹² having the general formula (III) may be a bond being connected with the bond of R¹⁴ or R¹⁸ directly or by means of O, S, NH, NR⁷ with NR⁷ being as defined above or C(O).

2. The compound according to claim 1, wherein R¹ in formula (I) is a branched, linear, dendrimeric, grafted or end-functionalized polymer having a weight-average molecular weight of 200 to 10,000 g/mol, preferably of 300 to 8,000 g/mol and more preferably of 500 to 5,000 g/mol, and wherein R¹ in formula (I) is selected from the group consisting of polyesters, polyamides, polycarbonates, polyurethanes, polyurea polyurethanes, functional saturated and unsaturated polyolefines, polyethers, polyimides, polyester amines, polyamines, polyvinylalcohols, polyvinylethers, polyvinylamines, polyvinylhalides, polyimines, polystyrenes, silicones, shellac, lignin, cellulose, dammar, rosin, rosin resins and novolac compounds.

3. The compound according to claim 1 or 2, wherein R¹ in formula (I) comprises at least one terminal acryl group, preferably 2 to 9 terminal acryl groups, more preferably 2 to 6 terminal acryl groups and most preferably 2 to 4 terminal acryl groups, and wherein m in formula (I) is an integer between 2 and 9, preferably between 2 and 6 and more preferably of 4.

4. The compound according to any of the preceding claims, wherein in the general formula (I) X is O or a bond and preferably X is O.

5. The compound according to any of the preceding claims, wherein in the general formula (I) R⁴ is a group with the general formula (II), whereas the remaining of R² to R⁶ are independently from each other selected from H and a branched or linear C₁₋₈-alkyl group.

6. The compound according to any of the preceding claims, wherein in the general formula (II) R¹⁰ is a group with the general formula (III), whereas all of the remaining R⁸ to R¹² are independently from each other selected from H, a branched or linear C₁₋₁₀-alkyl group, or a branched or linear C₁₋₁₀-alkenyl group, wherein furthermore one of R¹⁴ and R¹⁸ may be a bond and one of R⁸ to R¹² being adjacent to the one of the groups R⁸ to R¹² having the general formula (III) may be a bond being connected with the bond of R¹⁴ or R¹⁸ directly or by means of O, S, NH, NR⁷ with NR⁷ being as defined above or C(O).

7. The compound according to any of claims 1 to 5, wherein in the general formula (II) R⁹ and R¹⁰ or R¹⁰ and R¹¹ are a group with the general formula (III), wherein R⁹ and R¹⁰ or R¹⁰ and R¹¹ are connected with any of adjacent two of R¹⁴ to R¹⁸ in the formula (IV), whereas the remaining of R⁸ to R¹² are independently from each other selected from H, a branched or linear C₁₋₁₀-alkyl group, or a branched or linear C₁₋₁₀-alkenyl group.

8. The compound according to any of the preceding claims, wherein in the general formula (I):
X is O or a bond,
n is 1,
R⁴ is a group with the general formula (II),
R¹⁰ is a group with the general formula (III),
R², R³, R⁵, R⁶, R⁸, R⁹, R¹¹ and R¹² are independently from each other selected from H, a branched or linear C₁₋₁₀-alkyl group, and a branched or linear C₁₋₁₀-alkenyl group and
R¹⁴ to R¹⁸ are defined as described above,
wherein furthermore one of R¹⁴ and R¹⁸ may be a bond and R⁹ or R¹¹ may be a bond being connected with the bond of R¹⁴ or R¹⁸ directly or by means of O, S, NH, NR⁷ with NR⁷ being as defined above or C(O).

9. The compound according to claim 8, wherein:
i) X is O and R², R³, R⁵, R⁶, R⁸, R⁹, R¹¹ and R¹² are H or
ii) X is O and R², R³, R⁵, R⁶, R⁸ and R¹² are H, one of R¹⁴ and R¹⁸ is a bond and one of R⁹ and R¹¹ is a bond being connected with the bond of R¹⁴ or R¹⁸ directly or by means of O, S, NH, NR⁷ with NR⁷ being as defined above or C(O), wherein the other of R⁹ and R¹¹ is H, or
iii) X is bond and R², R³, R⁵, R⁶, R⁸, R⁹, R¹¹ and R¹² are H or
iv) X is bond and R², R³, R⁵, R⁶, R⁸ and R¹² are H, one of R¹⁴ and R¹⁸ is a bond and one of R⁹ and R¹¹ is a bond being connected with the bond of R¹⁴ or R¹⁸ directly or by means of O, S, NH, NR⁷ with NR⁷ being as defined above or C(O), wherein the other of R⁹ and R¹¹ is H.

10. The compound according to any of the preceding claims, wherein in the general formula (IV) R¹⁴ to R¹⁸ are independently from each other selected from H, a branched or linear C₁₋₁₀-alkyl group, and a branched or linear C₁₋₁₀-alkenyl group.

11. The compound according to any of the preceding claims, wherein in the general formula (III) R¹³ has the following general formula (VI): 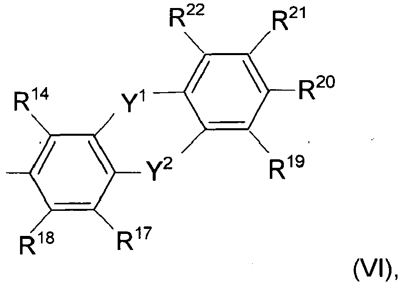 wherein
Y¹ and Y² are independently from each other bond, CH₂, CO, O, S, NH, NR⁷ with NR⁷ being as defined above and
R¹⁴, R¹⁷, R¹⁸ and R¹⁹ to R²² are independently from each other selected from H, a branched or linear C₁₋₁₀-alkyl group, or a branched or linear C₁₋₁₀-alkenyl group.

12. The compound according to claim 11, wherein in the general formula (VI):
i) Y¹ and Y² are CO,
ii) one of Y¹ and Y² is CO and the other one is S,
iii) one of Y¹ and Y² is CH₂ and the other one is CO,
iv) one of Y¹ and Y² is a bond and the other one is NH or NR⁷ with NR⁷ being as defined above,
v) one of Y¹ and Y² is a bond and the other one is CO,
vi) Y¹ and Y² are O or
vii) one of Y¹ and Y² is CH₂ and the other one is O.

13. The compound according to any of claims 1 to 10, wherein in the general formula (III) R¹³ has the following general formula (VII): 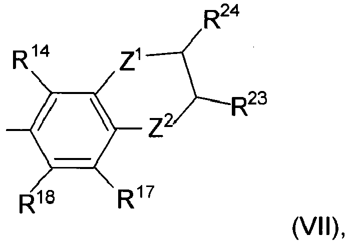 wherein
Z¹ and Z² are independently from each other CH₂, O, S, NH, NR⁷ with NR⁷ being as defined above, preferably Z¹ is O and Z² is CH₂,
R¹⁴, R¹⁷ and R¹⁸ are independently from each other selected from H, a branched or linear C₁₋₁₀-alkyl group, or a branched or linear C₁₋₁₀-alkenyl group, preferably R¹⁴, R¹⁷ and R¹⁸ are H and
R²³ to R²⁴ are independently from each other selected from H, =O, a branched or linear C₁₋₁₀-alkyl group, or a branched or linear C₁₋₁₀-alkenyl group, preferably both of R²³ and R²⁴ are =O.

14. The compound according to any of claims 1 to 10, wherein in the general formula (III) R¹³ has the following general formula (VIII): 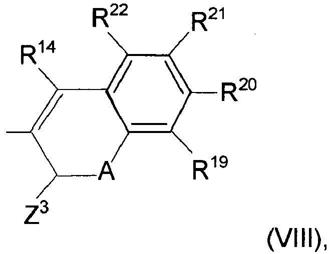 wherein
A is CH₂, O, S, NH or NR⁷ with NR⁷ being as defined above, preferably A is O,
Z³ is O, S, OH, SH, branched or linear C₁₋₈-alkyl group or NR⁷H, N(R⁷)₂ with R⁷ being as defined above, preferably Z³ is O,
R¹⁴ is selected from H, a branched or linear C₁₋₁₀-alkyl group, or a branched or linear C₁₋₁₀-alkenyl group, preferably R¹⁴ is selected from H and a branched or linear C₁₋₈-alkyl group, and
R¹⁹ to R²² are independently from each other selected from H, =O, a branched or linear C₁₋₁₀-alkyl group, or a branched or linear C₁₋₁₀-alkenyl group, preferably R¹⁹ to R²² are independently from each other selected from H and a branched or linear C₁₋₈-alkyl group.

15. An energy curable ink composition or energy curable varnish composition containing:
a) at least one binder,
b) at least one ethylenically unsaturated compound selected from monomers and/or oligomers and
c) as photoinitiator a compound according to any of the preceding claims.
